# EUROPEAN PATENT SPECIFICATION

(11) **EP 1 784 577 B1**
(45) Date of publication and mention of the grant of the patent: **20.11.2013**
(21) Application number: 05777165.1
(22) Date of filing: 30.08.2005
(51) Int. Cl.: F15B 15/26, F15B 21/08, B64C 25/00, F16F 9/56, G01B 21/00, G01B 7/00

(54) **LOCK SENSOR FOR AN INTERNALLY LOCKING ACTUATOR**
VERRIEGELUNGSSENSOR FÜR EIN INNEN VERRIEGELNDES STELLGLIED
CAPTEUR DE VERROU POUR UN ACTIONNEUR DE BLOCAGE INTERNE

(30) Priority: 30.08.2004 CA 2479454
(43) Date of publication of application: 16.05.2007
(73) Proprietor: Messier-Dowty, Inc., Ajax, Ontario L1S 2GB (CA)
(72) Inventor: ATAMAN, Gary, Stephen, Whitby, Ontario L1P 1L5 (CA); COFFIN, Mark, Whitby, Ontario L1R 1P2 (CA); SCHMIDT, Robert Kyle, Pickering, Ontario L7W 2Z4 (CA)
(74) Representative: Brand, Thomas Louis
(86) International application number: PCT/CA2005/001303
(87) International publication number: WO 2006/024145

(56) References cited:
- GB-A- 2 203 195
- GB-A- 2 286 227
- US-A- 3 177 780
- US-A- 3 415 167
- US-A- 3 453 937
- US-A- 3 453 937
- US-A- 4 295 413
- US-A- 5 050 484
- HERMETICALLY SEALED PROXIMITY SWITCH MODEL 8-527. DATASHEET, [Online] Retrieved from the Internet: <URL:http://www.eldec.com/mages/products/pd f/8-527.pdf>

## Description

### FIELD OF THE INVENTION

The present invention provides a sensing arrangement to positively determine the locked or locked status of an internally locking actuator. The present invention provides a lock sensor mechanism that may be used in an internally locking actuator used in aircraft landing gear.

### BACKGROUND OF THE INVENTION

An actuator is a mechanism that causes a device to be adjusted or moved, or turned on or off. Hydraulic actuators are used in aircraft landing gear to extend and retract the landing gear. In general, each actuator includes a cylinder or pressure vessel that contains a piston. The piston extends and retracts through the addition of a working fluid (hydraulic oil or compressed gas). Often it is desirable to add a mechanical lock facility to the actuator such that the piston may be mechanically restrained in either of or both the fully extended position and the fully retracted position. A variety of methods are known in the art to provide the mechanical locking facility - a lock which remains set in the absence of the working fluid. These include, but are not limited to the collet lock and the segment lock. In most mechanical lock mechanisms, a separate, independently movable piston within the primary piston is employed to perform the lock and unlock function. This *lock piston* is typically designed such that when the primary piston is not at either end of its displacement, the working fluid preferentially acts on the primary piston to move it. When the primary piston reaches the end of its displacement, the working fluid then works to displace the lock piston. In the case of the segment lock, the lock piston moves a plurality of lock segments that are sized to fit in grooves located in the cylinder when the lock segments are radially aligned with the grooves. The lock piston is unable to displace fully unless the lock segments mate with the grooves in the cylinder to achieve a true lock.

Knowing that the actuator has achieved a true lock is imperative in aircraft landing gear applications where this lock is used to ensure that the landing gear do not fold upon landing. A sensing system is employed to indicate to the pilot and the flight control system of the aircraft that a true, mechanical lock has been achieved. The lock piston, by virtue of being constrained within the primary piston is by design difficult to sense. The location of the lock piston must be somehow communicated outside of the piston and cylinder. This is performed by connecting to the lock piston a pin, which slides through a slot in the primary piston. This pin is generally used to align with and connect to a lock sensing mechanism to indicate whether the actuator is locked or unlocked. When the lock segments are not located within the external grooves the lock piston is unable to move past the lock segments and the lock indicator pin will not align with or connect to the lock sensing mechanism. When the lock segments are located within the external grooves the internal pressure in the vessel moves the lock piston beyond the lock segments and the lock indicator pin is able to align with and connect to the lock sensing mechanism.

Most of the current lock sensing mechanisms that are used in aircraft actuators are mechanical locking devices. As an example, in one device the sensing mechanism is located in an indicator housing assembly which is located at the end of the actuators side brace. A switch lever, located in the lock sensing mechanism extends from the indicator housing assembly into the path of the lock mechanism of the actuator piston. The lock sensing mechanism is activated when a lock indicator pin, connected to the locking mechanism in the piston, moves the switch lever magnifying a displacement on the other end of the lever. This magnified distance moves a target guide, which moves a target into proximity sensor range. The proximity sensors transmit a signal indicating that the piston is fully extended and locked.

The lock sensing mechanisms that include several mechanical parts may be worn down over time. Additionally, mechanical parts can tail to due to interference from foreign bodies or from general mechanical fatigue. It is therefore preferable to use a sensor that does not include mechanical parts and therefore may reduce the necessity for replacement or maintenance of the parts.

US 3453937 discloses a hydraulic actuator having a main operating piston and a concentric locking and unlocking piston moveable relative thereto, with the position of the locking piston controlling the extension of locking segments which hold the main operating piston of the actuator in one extreme position. The locking piston is connected to the locking segments by dogs which move over-center in the locked position. The locking piston has a probe movable therewith and a proximity sensor is located adjacent the locking position of the probe and senses its position to signal switching circuitry to activate indicators of the locked or unlocked condition of the actuator. The proximity sensor is located exteriorly of the cylinder for the operating and locking pistons and is illustrated in the form of an electromagnet having a sensing coil about a magnet circuit with an air gap which is decreased by the probe on the locking piston to change the reluctance of the magnetic path and the reactance and impedance of the coil where the body of the actuator is of a dielectric material the proximity sensor may rely on a change on the capacity reactance for its response.

### SUMMARY OF THE INVENTION

**The present invention provides** an aircraft landing gear actuator having an internal lock sensor, according to claim 1. The at least one field emitting device may be a proximity sensor. The at least one target may be made from metallic material. The at least one target may be, for example, ferromagnetic.

There is also described an internal lock sensor where the target is integral with the lock indicator ring, for example the target may be the lock indicator ring or may be mounted on the lock indicator ring.

There is also described a sensor including a second field emitting device located longitudinally from a first field emitting device at a location at which the field emitted from the second field emitting device is spaced from the field emitted from the first field emitting device, the at least one target being operable to move within each emitted field.

There is also described a sensor including a second field emitting device located in the same plane as a first field emitting device and circumferentially located relative to the first field emitting device to space the field emitted from the first field emitting device from the second field emitting device.

There is also described an aircraft landing gear actuator comprising a lock sensor described herein. The present invention further provides an actuator comprising a lock sensor described herein.

There is also described, an internal lock sensor, for use in an actuator the lock sensor comprising at least one field emitting device connected to the actuator and operable to emit a field and to measure a change in the emitted field and at least one target connected to actuator and operable to move into and out of the field emitted by the at least one field emitting device, the at least one target being operable to change the emitted field when located in the field. The at least one field emitting device may be a proximity sensor. The at least one target may be made from metallic material. The at least one target may be, for example, ferromagnetic.

There is also described an internal lock sensor where the target is integral with the lock indicator ring, for example the target may be the lock indicator ring or may be mounted on the lock indicator ring.

There is also described a method according to claim 15 for indicating the status of a lock sensor in an actuator.

There is also described a sensor that includes at least one positioning device for positioning the at least one field emitting device relative to the internal piston. The positioning device may be at washer or a shim. Additionally the at least one positioning device may be integral with the field emitting device and may comprise a washer and flange arrangement or a threading arrangement for altering the position of the field emitting device relative to the internal components of the actuator.

### BRIEF DESCRIPTION OF THE DRAWINGS

The present invention will now be described in further detail with reference to the accompanying drawings in which:

Figure 1 is a cut away side view of a prior art lock sensing mechanism;

Figure 2 is a cross sectional view of an actuator in which the lock sensor of the present invention may be used;

Figure 3 is a cross sectional view of the lock sensor of the present invention shown in the locked position;

Figure 4 is a cross sectional view of the lock sensor of the present invention shown in the unlocked position; and

Figures 5A and B illustrate examples of connecting devices for the field emitting device of the lock sensor of the present invention.

### DETAILED DESCRIPTION OF THE PREFERRED EMBODIMENTS

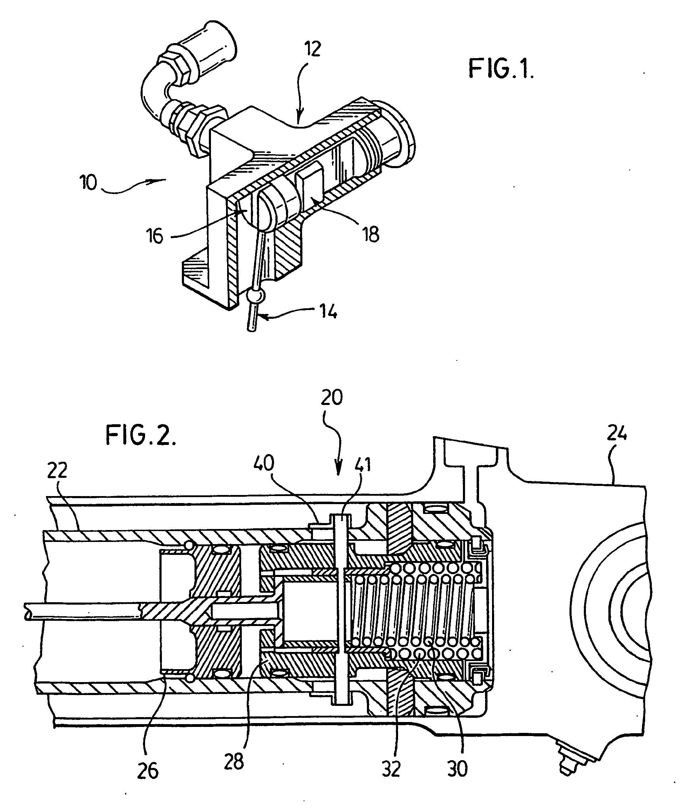

Before discussing the lock sensor of the present invention in detail, reference will now be made to Figure 1 which illustrates an example of a lock sensing mechanism currently used. The lock sensing mechanism 10 includes an indicator housing assembly 12 which contains a switch lever 14, a target guide 16 and a target 18. One end of the switch lever 14 extends out of the indicator housing assembly 12 and into the path of a lock indicator pin, not shown, located on an internal piston in the actuator to which the lock sensing mechanism 10 is attached. The use of this type of sensing mechanism 10 is described above in the background of the invention section.

The present invention will now be described in further detail with reference to Figure 2 in which an example of a partial view of the internal components of an actuator in which the present invention may be used is indicated generally at 20. The actuator 20 includes a piston 22 that is installed within a cylinder assembly 24. Within the inner diameter of the piston head is an internal lock mechanism that includes a plug 26, a lock piston 28, inner and outer springs 30, 32 and various other components that will not be described in detail. Lock segments 34 located around the lock piston 28 fit into grooves in the lock piston 28. The lock segments 34 extend when the lock piston 28 moves inside the piston head. When the lock segments 34 are located in the corresponding grooves in the cylinder 24 the piston is locked in the extended position. In the prior art device, illustrated in Figure 1, the lock piston 28 moves inside the piston head and a lock indicator pin 41 touches the switch lever 14 when the piston is fully extended which indicates that the actuator is extended and locked. When hydraulic fluid is supplied to retract the piston the hydraulic pressure will move the lock piston 28 inside the piston. As the lock piston 28 moves the lock segments retract into the piston head to unlock the piston 22 and the piston retracts. The movement of the lock piston 28 moves the lock indicator ring 40 away from the sensing mechanism and a signal that the actuator is unlocked is registered.

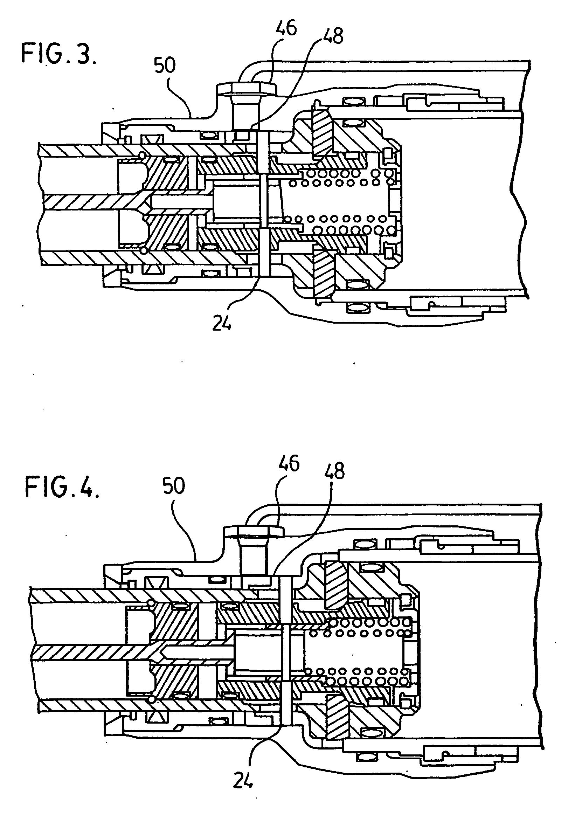

The lock sensor of the present invention will now be described in further detail with reference to Figures 3 and 4 in which the lock sensor is indicated generally at 44. The lock sensor 44 includes at least one field emitting device 46 and at least one target 48. The field emitting device 46 is mounted on a locking actuator pressure vessel where it monitors the position of the at least one target 48. The at least one target 48 is operable to move into and out of the field produced by the field emitting device 46. In general, the at least one field emitting device 46 emits a field that when breached sends a signal to indicate such. The breaching of the field may include either a break in the field or a change in a measurement of the emitted field. For example, the field emitting device may be an inductance sensor and a breach of the field is indicated by a change in the inductance measurement, for example when a ferromagnetic material moves into the field.

As an example, the field emitting device 46 may be a proximity sensor, such devices are known and commercially available, for example proximity sensors manufactured by Eldec Corporation. Examples of proximity sensors that may be used in the present invention include, but are not limited to, capacitive, eddy current killed oscillation, inductive, photoelectric, and ultrasonic. In a capacitive proximity sensor the field emitting device would act as one capacitor, and the target will include a conductive surface which will act as the second capacitor. The capacitance will vary inversely with the distance between the two capacitors and a pre-set value can be programmed to trigger target detection. In an eddy current killed oscillation proximity sensor an oscillating magnetic field is emitted by the sensor. In the presence of electrically conductive materials (such as a target) electrical eddy currents are generated. The sensor is designed such that the energy induced in the conductive target is sufficient to halt the oscillation of the magnetic field - killing the oscillation. In such a system the target may be made of metal and when moved into proximity with the field emitting device will cease oscillating thereby indicating a breach of the field. Other proximity sensors include photoelectric devices and ultrasonic proximity sensors.

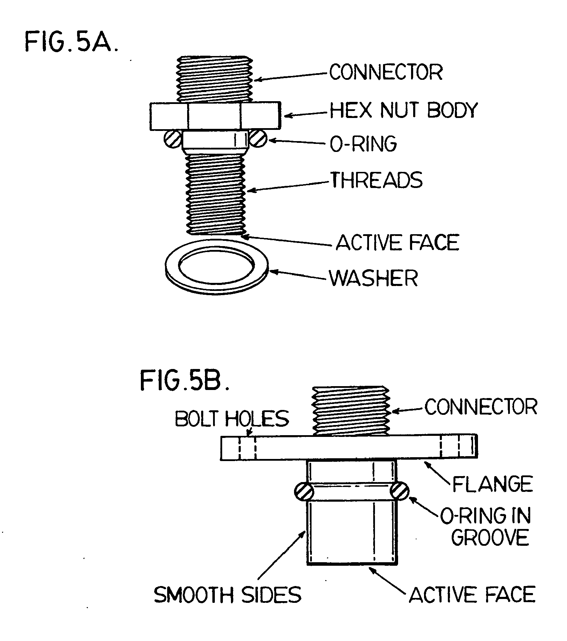

In one embodiment, the at least one field emitting device 46 is mounted on the rod end cap 50 of the side brace 52 of the actuator. The at least one field emitting device 46 may be mounted using threads, i.e a screw-type fit. It will be understood that the field emitting device 46 may be mounted by any means known to a person skilled in the art, in a manner that provides a pressure seal. Examples of ways for mounting or attaching the field emitting device 46 to the rod end cap, include but are not limited to, threading the field emitting device into the rod end cap, mounting the field emitting device to the rod end cap using an o-ring and a flange that may be attached to the rod end cap using, for example, bolts or screws, for which examples are illustrated in Figure 5.

In the embodiment illustrated in Figures 3 and 4 the target 48 is integral with the lock indicator ring 24. In this embodiment the lock indicator ring 24 is manufactured from a material that will induce a change in the field emitted from the field emitting device 46 when placed within the emitted field. In this manner the lock indicator ring 24 becomes the target 48. For example, if the field emitting device 46 is an inductance sensor then the target, i.e. the lock indicator ring 24, may be made from a metal material that will change the inductance measurement when it enters the field. For example, the lock indicator ring 24 may be made from a ferrous material. Alternatively, the target 48 may be mounted on to the lock indicator ring 24 and formed from different material than the lock indicator ring 24. For example, the target 48 may be made from a ferrous material and mounted, either partially or completely around the external periphery of the lock indicator ring 24. It will be understood that the mounting of the target 48 should be located on the lock indicator ring 24 at least at a position that will be within the range of the emitted field when the lock indicator ring 24 is located within the plane of the field.

The position for the mounting of the target 48 is chosen so that in the unlocked position the target 48 is not located within the field emitted by the field emitting device 46 and is located at a position outside of the field emitting device 46 sensing range. When the actuator 20 is in the locked position the target 48 moves within the field, either completely or partially so that the field is interrupted and the field emitting device 46 can identify that the field has been interrogated.

In an alternative embodiment the target 48 may be mounted directly on the lock piston 28. In this arrangement the mounting of the target 48 to the lock piston 28 may replace the lock indicator ring. The target 48 will be mounted on the lock piston 28 at a location that is operable to move into and out of the field. It will be understood that the position of the target 48 in this embodiment will be chosen in order to fulfill the requirements of the disclosed invention.

Due to production tolerances of the components in the actuator, it is preferable to provide axial adjustment of the field emitting device 46 in order to calibrate (rig) the field emitting device 46 for standard operation. The ability to provide axial adjustment allows field interchangeability of the actuator unit. In the embodiments described herein, this adjustment can be made at the attachment point of the field emitting device 46 to the end cap of the side brace. For example, if the field emitting device 46 is threaded onto the side brace then the axial adjustment may be made by releasing the threading attachment of the device 46 to the end cap, i.e. unscrewing the field emitting device or screwing the field emitting device to change the radial location of the field relative to the internal components of the actuator.. In addition, washers and/or shims may be included in the attachment of the field emitting device in order to change the radial position thereof.

The field emitting device 46 of the present invention will be chosen in order that it can withstand the pressure requirements of the actuator. In particular, the attachment of the field emitting device 46 must provide a pressure seal at the point of attachment to the end cap of the side brace.

When the lock sensor of the present invention is used in an actuator located in an aircraft landing gear application preferably the lock sensor includes two or more field emitting devices 46. The inclusion of an additional field emitting device 46 provides a back up to the system in case of failure of one of the field emitting devices 46. In the landing gear application it is preferable to have a back up to ensure that a measurement is taken to indicate to the pilot of the aircraft whether the actuator system is in the locked or unlocked position.

In an alternative embodiment of the present invention the lock sensor 44 may include two or more field emitting devices 46 located within the same circumferential plane. When the target 48, i.e. the lock indicator ring, moves into the plane in which the field emitting devices 46 are located then each field emitting device 46 identifies the presence of the target 48 and more than one indication of the actuator being in the locked position is made. This embodiment provides one example of a system that includes a back up measurement. An alternative embodiment in which two field emitting devices 46 are included may position a second field emitting device 46 longitudinally spaced along the axis of the actuator from the first field emitting device 46. In this embodiment the two field emitting devices 46 may be positioned so that when the actuator is in the locked position the target 48 is located within the field of the first field emitting devices 46. When the actuator is in the unlocked position the target 48 will be located within the field of the second field emitting device 48.

In an alternative embodiment the at least one field emitting device 48 is located adjacent the lock segments 26 and the at least one target 48 is integral with or attached to one or more of the lock segments 26. In this embodiment the field emitted by the at least one field emitting device 46 extends a predetermined distance radially inwards from the periphery of the actuator. The field emitting devices 46 in this embodiment will be designed so that the field emitted does not radially extend within reach of being breached by the lock segment 26 containing the target 48 when they are in the unlocked position. This means that when the lock segments 26 are not located in the grooves of the piston they do not breach the field emitted by the at least one field emitting device 46. However, when the lock segments 26 are located in the grooves in the locked position the field is breached and an indication that the actuator is locked is made.

It will be understood that the field emitting device 46 may be operable to only record a change in the field emitted therefrom. Alternatively, the field emitting device 46 may be capable of analysing the recorded change or transmitting the recorded change to a control system located on or near the actuator so that the reporting of or manipulation of the reading is performed by the control system. Any recorded change in the field will be used to send an indication to the pilot, when used in aircraft landing gear, to indicate that the system is in the locked or unlocked position.

The use of the inductance proximity sensor will now be discussed with reference to Figures 3 and 4. When the piston is fully extended, hydraulic pressure forces the lock piston 22 to move within the piston head forcing the lock segments 26 between the cylinder and rod end cap, locking the side brace in the fully extended position. The lock indicator ring 24 including the target 48 will then move into the range of the field emitting device 46. As an example, and not meant to be limiting in any way, in an embodiment in which the field emitting device 46 measures inductance, when the field emitting device 46 inductance reaches greater than or equal to a first predetermined measurement, for example 5.12mH, it will then transmit a signal indicating the piston is fully extended and locked. To retract the piston, hydraulic fluid is applied at the retract port. This pressure is greater than the lock spring pressure causing the lock piston 22 to move back. By doing so the lock segments 26 collapse within the piston head pulling the lock indicating ring 24 back toward the cylinder. When the target 48 is out of the range of the field emitting device 48, the inductance drops to less than or equal to second predetermined measurement, for example 4.89 mH, transmitting a signal indicating the piston is fully unlocked.

While this invention has been described with reference to illustrative embodiments and examples, the description is not intended to be construed in a limiting sense. Thus, various modifications of the illustrative embodiments, as well as other embodiments of the invention, will be apparent to persons skilled in the art upon reference to this description. It is therefore contemplated that the appended claims will cover any such modifications or embodiments. Further, all of the claims are hereby incorporated into the description of the preferred embodiments.

## Claims

1. An aircraft landing gear actuator (20) having an internal lock sensor (10), the lock sensor comprising:
i. at least one field emitting device (46) mounted on an actuator pressure vessel to provide a pressure seal to withstand pressure requirements of the actuator and operable to emit a field and to measure a change in the emitted field; and
ii. at least one target (48) connected to the actuator (20) and operable to move into and out of the field emitted by the at least one field emitting device, the at least one target being operable to change the emitted field when located in the field.

2. The actuator (20) according to claim 1 having an internal piston (22) connected to a lock indicator ring (40) and having at least one lock segment (34) connected thereto, wherein the at least one target (48) is connected to the internal piston.

3. The actuator (20) according to claim 2 wherein the lock indicator ring (40) is located on the actuator.

4. The actuator (20) according to claim 2 or claim 3 wherein the at least one target is integral with the lock indicator ring.

5. The actuator (20) according to claim 4 wherein the at least one target (48) is the lock indicator ring (40).

6. The actuator (20) according to claim 2 or claim 3 wherein the at least one target (48) is mounted on the lock indicator ring (40).

7. The actuator (20) according to claim 2 or claim 3 wherein the at least one target (48) is mounted on the internal piston (22) of the actuator (20).

8. The actuator (20) according to any one of claims 2 to 7, further comprising at least one positioning device for positioning the at least one field emitting device (48) relative to the internal piston (22).

9. The actuator (20) according to any one of claims 1 to 8 wherein the at least one field emitting device (46) is a proximity sensor.

10. The actuator (20) according to any one of claims 1 to 9 wherein the at least one target (48) is a metallic material.

11. The actuator (20) according to any one of claims 1 to 10 wherein the at least one target (48) is ferromagnetic.

12. The actuator (20) according to any one of claims 1 to 11, further comprising a second field emitting device located longitudinally from a first field emitting device at a location at which the field emitted from the second field emitting device is spaced from the field emitted from the first field emitting device (46), the at least one target (48) being operable to move within each emitted field.

13. The actuator (20) lock sensor according to any one of claims 1 to 11, further comprising a second field emitting device located in the same plane as a first field emitting device (46) and circumferentially located relative to the first field emitting device to space the field emitted from the first field emitting device from the second field emitting device.

14. The actuator (20) according to any one of claims 1 to 13 wherein the at least one field emitting device (46) is located on a side brace of the actuator (20).

15. A method used on an aircraft for indicating the status of a lock sensor (22) in an actuator (20) of an aircraft landing gear, the lock sensor having at least one field emitting device (46) mounted on an actuator pressure vessel to provide a pressure seal to withstand pressure requirements of the actuator and a target (48) operable to move into and out of the field emitted from the field emitting device, the method comprising the steps of:
i. emitting a field from the at least one field emitting device;
ii. measuring the emitted field; and
iii. reporting any change in the emitted field.

## Patentansprüche

1. Betätigungselement (20) für ein Flugzeug-Fahrwerk mit einem internen Verriegelungssensor (10), wobei der Verriegelungssensor Folgendes umfasst:
i. mindestens eine Feldemissionsvorrichtung (46), die an einem Betätigungselement-Druckgefäß angebracht ist, um eine Druckdichtung vorzusehen, um Druckanforderungen des Betätigungselements zu widerstehen und die wirksam ist, um ein Feld zu emittieren und eine Änderung des emittierten Felds zu messen; und
ii. mindestens ein Ziel (48), das mit dem Betätigungselement (20) verbunden ist und wirksam ist, um sich in das von der mindestens einen Feldemissionsvorrichtung emittierte Feld und daraus heraus zu bewegen, wobei das mindestens eine Ziel wirksam ist, um das emittierte Feld zu verändern, wenn es sich in dem Feld befindet.

2. Betätigungselement (20) nach Anspruch 1, das einen mit einem Verriegelungsanzeigering (40) verbundenen innenliegenden Kolben (22) aufweist und mindestens ein damit verbundenes Verriegelungssegment (34) aufweist, wobei das mindestens eine Ziel (48) mit dem innenliegenden Kolben verbunden ist.

3. Betätigungselement (20) nach Anspruch 2, wobei sich der Verriegelungsanzeigering (40) an dem Betätigungselement befindet.

4. Betätigungselement (20) nach Anspruch 2 oder Anspruch 3, wobei das mindestens eine Ziel einstückig mit dem Verriegelungsanzeigering ausgebildet ist.

5. Betätigungselement (20) nach Anspruch 4, wobei es sich bei dem mindestens einen Ziel (48) um den Verriegelungsanzeigering (40) handelt.

6. Betätigungselement (20) nach Anspruch 2 oder Anspruch 3, wobei das mindestens eine Ziel (48) an dem Verriegelungsanzeigering (40) angebracht ist.

7. Betätigungselement (20) nach Anspruch 2 oder Anspruch 3, wobei das mindestens eine Ziel (48) an dem innenliegenden Kolben (22) des Betätigungselements (20) angebracht ist.

8. Betätigungselement (20) nach einem der Ansprüche 2 bis 7, weiter umfassend mindestens eine Positionierungsvorrichtung zum Positionieren der mindestens einen Feldemissionsvorrichtung (48) relativ zu dem innenliegenden Kolben (22).

9. Betätigungselement (20) nach einem der Ansprüche 1 bis 8, wobei es sich bei der mindestens einen Feldemissionsvorrichtung (46) um einen Näherungssensor handelt.

10. Betätigungselement (20) nach einem der Ansprüche 1 bis 9, wobei es sich bei dem mindestens einen Ziel (48) um ein Metallmaterial handelt.

11. Betätigungselement (20) nach einem der Ansprüche 1 bis 10, wobei das mindestens eine Ziel (48) ferromagnetisch ist.

12. Betätigungselement (20) nach einem der Ansprüche 1 bis 11, weiter umfassend eine zweite Feldemissionsvorrichtung, die sich in Längsrichtung von einer ersten Feldemissionsvorrichtung entfernt an einem Ort befindet, an dem das von der zweiten Feldemissionsvorrichtung emittierte Feld von dem von der ersten Feldemissionsvorrichtung (46) emittieren Feld beabstandet ist, wobei das mindestens eine Ziel (48) wirksam ist, um sich innerhalb von jedem emittierten Feld zu bewegen.

13. Betätigungselement (20)-Verriegelungssensor nach einem der Ansprüche 1 bis 11, weiter umfassend eine zweite Feldemissionsvorrichtung, die sich in der selben Ebene befindet wie eine erste Feldemissionsvorrichtung (46) und sich derart in Umfangsrichtung relativ zu der ersten Feldemissionsvorrichtung befindet, dass das von der ersten Feldemissionsvorrichtung emittierte Feld von der zweite Feldemissionsvorrichtung beabstandet ist.

14. Betätigungselement (20) nach einem der Ansprüche 1 bis 13, wobei sich die mindestens eine Feldemissionsvorrichtung (46) an einer Seitenstrebe des Betätigungselements (20) befindet.

15. Verfahren, das an einem Flugzeug verwendet wird, um den Zustand eines Verriegelungssensors (22) in einem Betätigungselement (20) eines Flugzeug-Fahrwerks anzuzeigen, wobei der Verriegelungssensor mindestens eine Feldemissionsvorrichtung (46) aufweist, die an einem Betätigungselement-Druckgefäß angebracht ist, um eine Druckdichtung bereitzustellen, um Druckanforderungen des Betätigungselements zu widerstehen und ein Ziel (48) aufweist, das wirksam ist, um sich in das von der Feldemissionsvorrichtung emittierte Feld hinein und daraus hinaus zu bewegen, wobei das Verfahren folgende Schritte umfasst:
i. Emittieren eines Felds von der mindestens einen Feldemissionsvorrichtung;
ii. Messen des emittierten Felds; und
iii. Melden jeder Änderung des emittierten Felds.

## Revendications

1. Actionneur (20) pour train d'atterrissage d'aéronef, ayant un capteur de verrouillage interne (10), le capteur de verrouillage comportant :
i. au moins un dispositif à émission de champ (46) monté sur un appareil sous pression de l'actionneur à des fins de mise en oeuvre d'un joint d'étanchéité pressurisé pour résister aux exigences de pression de l'actionneur et fonctionnant à des fins d'émission d'un champ et à des fins de mesure d'un changement dans le champ émis ; et
ii. au moins une cible (48) raccordée à l'actionneur (20) et fonctionnant à des fins de déplacement dans et hors du champ émis par ledit au moins un dispositif à émission de champ, ladite au moins une cible fonctionnant à des fins de changement du champ émis quand elle se trouve dans le champ.

2. Actionneur (20) selon la revendication 1, ayant un piston interne (22) raccordé à un anneau de vérification de verrouillage (40) et ayant au moins un segment de verrouillage (34) raccordé à celui-ci, dans lequel ladite au moins une cible (48) est raccordée au piston interne.

3. Actionneur (20) selon la revendication 2, dans lequel l'anneau de vérification de verrouillage (40) est situé sur l'actionneur.

4. Actionneur (20) selon la revendication 2 ou la revendication 3, dans lequel ladite au moins une cible est formée d'une seule pièce avec l'anneau de vérification de verrouillage.

5. Actionneur (20) selon la revendication 4, dans lequel ladite au moins une cible (48) est l'anneau de vérification de verrouillage (40).

6. Actionneur (20) selon la revendication 2 ou la revendication 3, dans lequel ladite au moins une cible (48) est montée sur l'anneau de vérification de verrouillage (40).

7. Actionneur (20) selon la revendication 2 ou la revendication 3, dans lequel ladite au moins une cible (48) est montée sur le piston interne (22) de l'actionneur (20).

8. Actionneur (20) selon l'une quelconque des revendications 2 à 7, comportant par ailleurs au moins un dispositif de positionnement permettant de positionner ledit au moins un dispositif à émission de champ (48) par rapport au piston interne (22).

9. Actionneur (20) selon l'une quelconque des revendications 1 à 8, dans lequel ledit au moins un dispositif à émission de champ (46) est un capteur de proximité.

10. Actionneur (20) selon l'une quelconque des revendications 1 à 9, dans lequel ladite au moins une cible (48) est un matériau métallique.

11. Actionneur (20) selon l'une quelconque des revendications 1 à 10, dans lequel ladite au moins une cible (48) est ferromagnétique.

12. Actionneur (20) selon l'une quelconque des revendications 1 à 11, comportant par ailleurs un second dispositif à émission de champ situé dans le sens longitudinal depuis un premier dispositif à émission de champ au niveau d'un emplacement où le champ émis en provenance du second dispositif à émission de champ est espacé par rapport au champ émis en provenance du premier dispositif à émission de champ (46), ladite au moins une cible (48) fonctionnant à des fins de déplacement dans chaque champ émis.

13. Capteur de verrouillage pour actionneur (20) selon l'une quelconque des revendications 1 à 11, comportant par ailleurs un second dispositif à émission de champ situé dans le même plan qu'un premier dispositif à émission de champ (46) et situé dans le sens de la circonférence par rapport au premier dispositif à émission de champ à des fins d'espacement du champ émis en provenance du premier dispositif à émission de champ par rapport au second dispositif à émission de champ.

14. Actionneur (20) selon l'une quelconque des revendications 1 à 13, dans lequel ledit au moins un dispositif à émission de champ (46) est situé sur une contrefiche latérale de l'actionneur (20).

15. Procédé utilisé sur un aéronef pour indiquer le statut d'un capteur de verrouillage (22) dans un actionneur (20) d'un train d'atterrissage d'aéronef, le capteur de verrouillage ayant au moins un dispositif à émission de champ (46) monté sur un appareil sous pression de l'actionneur à des fins de mise en oeuvre d'un joint d'étanchéité pressurisé pour résister aux exigences de pression de l'actionneur et une cible (48) fonctionnant à des fins de déplacement dans et hors du champ émis par le dispositif à émission de champ, le procédé comportant les étapes consistant à :
i. émettre un champ en provenance dudit au moins un dispositif à émission de champ ;
ii. mesurer le champ émis ; et
iii. rapporter tout changement dans le champ émis.
